# EUROPÄISCHE PATENTSCHRIFT

(11) **EP 3 064 056 B1**
(45) Veröffentlichungstag und Bekanntmachung des Hinweises auf die Patenterteilung: **09.05.2018**
(21) Anmeldenummer: 16000525.2
(22) Anmeldetag: 04.03.2016
(51) Int. Cl.: A01G 23/06

(54) **VORRICHTUNG ZUM FÄLLEN VON BÄUMEN UND ENTFERNEN VON BAUMSTÜMPFEN**
DEVICE FOR FELLING TREES AND REMOVING TREE STUMPS
DISPOSITIF DESTINE A L'ABATTAGE D'ARBRES ET A ELIMINER LES SOUCHES D'ARBRES

(30) Priorität: 06.03.2015 DE 102015003025
(43) Veröffentlichungstag der Anmeldung: 07.09.2016
(73) Patentinhaber: Novafluid Wacker Hydraulik GmbH, 72124 Pliezhausen (DE)
(72) Erfinder: Wacker, Hans, 72124 Pliezhausen (DE)
(74) Vertreter: Rings, Rolf

(56) Entgegenhaltungen:
- CH-A- 346 722
- CN-U- 204 498 967
- DE-A1- 2 552 829
- DE-A1-102005 008 402
- US-B1- 8 291 995

## Beschreibung

Die vorliegende Erfindung bezieht sich auf eine Vorrichtung zum Fällen von Bäumen und Entfernen von Baumstümpfen nach dem Oberbegriff des Anspruchs 1. Und zwar betrifft die Erfindung derartige Vorrichtungen zum Baumfällen, mit welchen neben dem normalen Fällen der Bäume auch eine Entfernung des sogenannten Wurzelstumpfes möglich ist. Im Stand der Technik werden bisher für diesen Zweck häufig unterschiedliche Vorrichtungen eingesetzt, einerseits zum Fällen des Baumes (Sägevorrichtungen, Baumfäller und dergleichen) und andererseits zum anschließenden Entfernen des zurückgebliebenen Wurzelbereichs des Baumes, um eine erneute Bepflanzung und anderweitige Nutzung des Bereichs zu ermöglichen.

Für den letztgenannten Zweck einer Wurzelstumpfentfernung sind im Stand der Technik verschiedene schwere Geräte bekannt gewesen. So verwendet man bisher zum Heraustrennen von Baumstümpfen aus dem Erdreich sogenannte Stubbenfräsen, welche auf einem fahrbaren Untersatz motorbetrieben ein mit hoher Drehzahl drehendes Fräsblatt aufweisen, mit welchem quasi in das Erdreich hinein gefräst wird und die jeweiligen Wurzeln abgetrennt werden. Solche selbstfahrenden schweren Stubbenfräsen oder Baumstumpffräsen sind jedoch vergleichsweise unhandlich in der Handhabung und können in bestimmten Bereichen mit engen Raumverhältnissen gar nicht zum Einsatz gelangen. Außerdem ist mit derartigen Baumstumpffräsen ein eigentliches Fällen der Bäume nicht möglich. Der Baum selbst muss zunächst oberhalb des Erdreichs auf konventionelle Art und Weise; beispielsweise mittels Kettensägen, gefällt werden. In manchen Situationen verbleibt außerdem nur das manuelle Ausgraben der Baumwurzeln, schon aufgrund der beengten Raumverhältnisse oder beispielsweise wenn es sich um einen Gartenbaum handelt, bei welchem die umgebenden Anpflanzungen möglichst wenig Schaden nehmen sollen.

Auf der anderen Seite waren im Stand der Technik auch kombinierte Geräte zum gleichzeitigen Fällen von Bäumen und Entfernen von Baumstümpfen aus dem Erdreich bekannt. So offenbart beispielsweise die deutsche Offenlegungsschrift DE 25 52 829 A1 eine Vorrichtung und ein Verfahren zum Ausreißen von Bäumen und zum Abtrennen von Wurzeln. Die Vorrichtung ist hier an einem Ausleger eines Traktors oder ähnlichem Schwerlastfahrzeug angebracht und umfasst eine hydraulische Kolbenzylindervorrichtung, mit welcher eine stoßende, hackende, schlagende oder anderweitig periodisch schwankende Kraft in Richtung auf den Wurzelbereich des Baumes ausgeübt werden kann. Die Hydraulikvorrichtung dieser bekannten Vorrichtung wird mittels eines Auslegers des Fahrzeugs an dem Baumstamm angelegt und eine hydraulische Kraft wird in Richtung zu dem Wurzelbereich eingeleitet. Zum eigentlichen Abtrennen dient eine Abtrennvorrichtung, welche mit vollständig den Umfang des Baumes umgreifenden Schneidelementen versehen ist. Auch diese bekannte Vorrichtung zum Baumfällen und Abtrennen von Wurzeln ist ein vergleichsweise schweres Gerät für die Anwendung im freien Gelände und ist daher nur an solchen Bäumen anwendbar, die einerseits frei zugänglich sind, und bei denen andererseits keine beengten Raumverhältnisse um den Baumstamm herum gegeben sind. Durch das schwere Fahrzeug (Bagger, Traktor, etc.), an welchem diese bekannte Vorrichtung anzubringen ist, ist außerdem eine Beschädigung von umliegenden Bereichen, beispielsweise Wegen, Beeten oder anderen Pflanzungen, nicht zu vermeiden, so dass eine Neuanpflanzung oder Reparatur anschließend erforderlich ist.

In vielen Bereichen, beispielsweise auf Friedhöfen, in Gärten von Einfamilienhäusern, an Mauern, verbleibt daher für die Entfernung von Baumstümpfen lediglich das manuelle Ausgraben der Wurzelstümpfe, was vergleichsweise zeitaufwändig und mühsam ist.

Vor diesem Hintergrund ist es die Aufgabe der vorliegenden Erfindung, eine Vorrichtung zum Fällen von Bäumen und zum Entfernen von Baumstümpfen bereit zu stellen, mit welcher auch an schwer zugänglichen Standorten und bei vergleichsweise beengten Raumverhältnissen um die Bäume herum eine effektive Entfernung der Bäume und Baumstümpfe mit konstruktiv einfachen Mitteln ermöglicht wird. Zudem soll mit der erfindungsgemäßen Vorrichtung eine Beschädigung der direkten Umgebung des zu fällenden Baumes möglichst gering gehalten werden und ein hoch flexibler mobiler Einsatz gewährleistet werden.

Diese Aufgabe wird mit der Vorrichtung mit den Merkmalen des Anspruchs 1 gelöst. Vorteilhafte Ausgestaltungen und Weiterbildungen der Erfindung sind Gegenstand der abhängigen Ansprüche.

Die Vorrichtung zum Fällen von Bäumen und Entfernen von Baumstümpfen nach der Erfindung ist eine hydraulisch betriebene Vorrichtung und weist ein Hydraulikaggregat auf, welches über eine Steuereinheit steuerbar ist und über Hydraulikschläuche mit einer Schneideeinheit verbunden ist, wobei die Schneideeinheit einen Hydraulikzylinder und ein mit einem Kolben über eine Kolbenstange verbundenes Schwert umfasst, das zum Abtrennen von Baumstümpfen oder Wurzeln ausgebildet ist. Die Schneideeinheit ist demgemäß eine hydraulische Kolben-/Zylindereinheit, die an dem Kolben bzw. der mit dem Kolben verbundenen Kolbenstange mit einem schwertartigen Element zum Durchtrennen von Wurzeln oder Baumstümpfen versehen ist. Die Vorrichtung nach der Erfindung ist dadurch gekennzeichnet, dass die Schneideeinheit und das Hydraulikaggregat fahrzeugunabhängige mobile Komponenten sind und dass ein Fixierelement vorgesehen ist, welches mit dem Hydraulikzylinder der Schneideeinheit lösbarem Umfang eines Baumstammes an verschiedenen radialen Positionen koppelbar ist und derart ausgebildet ist, dass für die hydraulische Krafteinleitung in Richtung des Wurzelbereiches des Baumes eine feste Fixierung der Schneideeinheit mindestens in Längsrichtung des Baumstammes und in unmittelbarer Stammnähe möglich ist. Das Hydraulikaggregat ist durch die Hydraulikschläuche flexibel und in einem Abstand von dem zu fällenden Baum positionierbar. Lediglich die Schneideeinheit selbst wird direkt an dem Baumstamm angebracht über die Kopplung mit einem Fixierelement, welches wiederum eine feste Anbringung an dem Baumstamm selbst mit zumindest einer Fixierung in longitudinaler Richtung gewährleistet. Die Schneideeinheit ist aus einem doppelt wirkenden hydraulischen Zylinder und Kolben mit einer Kolbenstange gebildet, wobei an der Kolbenstange ein endseitiges Schwert angebracht ist, das zum Abtrennen von Wurzeln oder Baumstümpfen geeignet ist. Das Schwert kann die Form einer Schneide oder eines Schneidplattes aufweisen und wird durch die mit dem Hydraulikaggregat betriebene hydraulische Kolben-/Zylindereinheit nach einer Befestigung am Baumstamm durch das Fixierelement gezielt in das Erdreich im Bereich der Wurzeln des Baumes vorangetrieben.

Da die Schneideeinheit mit dem Fixierelement lösbar an verschiedenen radialen Positionen am Umfang des Baumstammes koppelbar ist, kann gezielt der Wurzelbereich von einer Seite her zu anderen Seiten hin abgetrennt werden, um eine bestimmte Fallrichtung des Baumes zu gewährleisten. Die Schneideeinheit, welche lediglich über Hydraulikschläuche mit dem Hydraulikaggregat gekoppelt ist, ist vergleichsweise klein im Bauvolumen, so dass sie auch an beengten Räumlichkeiten und Stellen leicht montiert werden kann. Wenn beispielsweise ein Baum nahe an einer Mauer gepflanzt ist, kann trotzdem die erfindungsgemäße Vorrichtung an dem gesamten Umfang des Baumstammes angesetzt und zum Fällen und Entfernen der Baumstümpfe eingesetzt werden. Durch das Verwenden eines Hydraulikaggregates zum Erzeugen der Kraft für die Betätigung der Schneideeinheit mit dem endseitigen Schwert können sehr hohe Kräfte gezielt an den gewünschten Stellen im Wurzelbereich eingeleitet werden. Die Vorrichtung ist nicht zuletzt sehr flexibel einsetzbar, da sie als fahrzeugunabhängige mobile Einheit mit manuell transportierbaren Komponenten realisiert ist. Die Kopplung zwischen dem Fixierelement und der Schneideeinheit ist derart vorgesehen, dass mindestens in Längsrichtung des Baumes die Schneideeinheit sicher am Stamm fixiert wird. Auf diese Weise ist gewährleistet, dass die nötige Abstützung für die hydraulische Krafteinleitung in das Erdreich zum Betätigen des Schwerts gegeben ist. Auf der anderen Seite kann die Schneideeinheit und damit das in das Erdreich eindringende Schwert seitlich um eine Anlenkungspunkt herum etwas verstellt werden, so dass mit einer Stelle einer Fixierung durch das Fixierelement auch verschiedene Stellen im Erdreich zum Abtrennen von Wurzeln erreichbar sind. Die erfindungsgemäße Vorrichtung ist damit nicht nur variabel an schwer zugänglichen Stellen von Bäumen einsetzbar, sondern kann zudem gezielt zum Erzeugen der gewünschten Fallrichtung der Bäume leicht verwendet werden.

Gemäß einer vorteilhaften Ausgestaltung der Erfindung ist die Schneideeinheit an dem zum Schwert gegenüberliegenden Ende mit einem Befestigungsgelenkauge versehen für eine variable Schwenkbarkeit im Verhältnis zum Fixierelement. Die Schneideeinheit ist somit an dem Fixierelement über ein Befestigungsgelenkauge derart fixiert, dass eine hohe Kraft mittels des hydraulischen Drucks auf Richtung des endseitigen Schwertes der Schneideeinheit ausgeübt werden kann, und zwar dies nicht nur in einer geradlinigen Richtung nach unten entlang der Längsachse des Baumstammes, sondern ebenso in seitlich verschwenkten Positionen der Schneideeinheit. Das Vorsehen eines Befestigungsgelenkauges als Anlenkungspunkt für die Schneideeinheit an dem Fixierelement ist zudem nicht nur eine seitliche Verstellung der Schneideeinheit in einem gewissen Winkelbereich zum Erreichen von verschiedenen Wurzeln des Baumstammes möglich, sondern die Schneideeinheit kann ebenso auch leicht weg von dem Baum ausgerichtet werden. Es ist somit mit der erfindungsgemäßen Vorrichtung möglich, entsprechend den lokalen Gegebenheiten den Trennvorgang der Baumwurzeln gezielt zu optimieren. Vorzugsweise ist die Schneideeinheit jedoch möglichst nahe und direkt am Baumstamm angebracht über die Kopplung zwischen der Schneideinheit und dem Fixierelement, das selbst direkt an dem Baum fest angebracht ist. Mit solch einem Befestigungsgelenkauge als Kopplungspunkt zwischen der Schneideeinheit und dem Fixierelement ist außerdem eine lösbare Fixierung an verschiedenen radialen Positionen leicht möglich. Das Befestigungsgelenkauge kann beispielsweise auf entsprechende vorragende Zapfen oder eine im Baum angebrachte Welle eingesetzt werden und leicht wieder nach Durchführung der Schneidearbeit davon abgenommen werden. Als ein solches Befestigungsgelenkauge nach der Erfindung kann beispielsweise eine Art Kugelgelenklager verwendet werden, das keine geradlinige zylindrische Bohrung, sondern eine nach den Außenseiten hin abgerundete Bohrung aufweist, so dass in einem Kopplungszapfen des Fixierelements die Schneideeinheit in sämtlichen Richtungen hin frei beweglich fixiert wird. Auch kann das Befestigungsgelenkauge mit einem Einsatz nach Art eines Kugelgelenks gebildet sein, welches eine Verdrehung in sämtliche Richtungen zur optimalen Ausrichtung der Vorrichtung auf den Wurzelbereich hin ermöglicht. Die Möglichkeiten eines Einsatzes der Vorrichtung zum Fällen von Bäumen sind damit stark erhöht und es kann optimal auf die jeweiligen Gegebenheiten vor Ort reagiert werden.

Gemäß einer weiteren vorteilhaften Ausgestaltung der Erfindung sind das Hydraulikaggregat und die Schneideeinheit voneinander getrennte und flexibel positionierbare Komponenten, welche vorzugsweise manuell transportierbar und aufstellbar sind. Somit kann beispielsweise ein einen Motor und eine Hydraulikpumpe enthaltendes Hydraulikaggregat in einem Abstand von der Schneideeinheit und damit etwas entfernt von dem zu fällenden Baum abgestellt werden, wohingegen die Schneideeinheit selbst direkt am Stamm zusammen mit dem Fixierelement angebracht wird. Die Vorrichtung ist somit zum Fällen von Bäumen und Entfernen von Baumstümpfen auch in solchen Situationen bestens geeignet, in welchen der Stamm nicht leicht zugänglich ist aufgrund von angrenzenden Hindernissen, wie zum Beispiel einer Mauer oder im Fall eines Friedhofs mit engstehenden Grabmälern. Die zum Abtrennen dienende Schneideeinheit und das Fixierelement selbst sind wenig raumeinnehmend und können direkt und sehr nahe am Baumstamm angebracht werden. Daher lässt sich eine gezielte Fällung und Wurzelentfemung mit der erfindungsgemäßen Vorrichtung ausführen, ohne dass ein großer gerätetechnischer Aufwand betrieben werden muss. Nicht zuletzt kann die erfindungsgemäße Vorrichtung manuell transportiert werden und beliebig je nach den Gegebenheiten aufgestellt werden. Es ist nicht erforderlich, schwere Transportfahrzeuge, wie zum Beispiel Bagger, Stubbenfräsen oder ähnliches einzusetzen, die auch zu Beschädigungen der umliegenden Bereiche, beispielsweise in einem Garten eines Einfamilienhauses, führen würden. Um solche manuell transportierbaren und aufstellbaren Komponenten des Hydraulikaggregats und der Schneideeinheit zu realisieren, sind die Formen und das Gewicht der Komponenten jeweils angepasst. Beispielsweise kann das Hydraulikaggregat ein entsprechendes Tragegestell aufweisen, mit welchem es leicht von Hand an verschiedenen Stellen platziert werden kann.

Gemäß einer weiteren vorteilhaften Ausgestaltung der Erfindung weist das Fixierelement, das zur Fixierung direkt am Baumstamm dient, mindestens einen zapfenartigen Abschnitt auf, mit welchem die Schneideeinheit mittels eines Befestigungsgelenkauges oder ähnlichem koppelbar ist. Ein solcher Zapfen, der von dem Fixierelement in einer am Baumstamm angebrachten Situation radial nach außen vorragt, kann beispielsweise ein runder, wellenartiger Zapfen sein. Der zapfenartige Abschnitt des Fixierelements bildet einen sicheren Anbringungspunkt an dem Baumstamm für die Schneideeinheit. Er ermöglicht zudem ein leichtes und schnelles Anbringen und Lösen der Schneideeinheit, um beispielsweise verschiedene radiale Positionen am Umfang des Baumstammes zum Durchtrennen der jeweiligen Wurzeln im Erdreich einzustellen. Ein solcher zapfenartiger Abschnitt hat außerdem den Vorteil, dass die seitliche Beweglichkeit der Schneideeinheit, die aus der hydraulischen Kolben-/Zylindereinheit und dem Schwert besteht, gewährleistet ist. Das Schwert kann so in verschiedenen Ausrichtungen und Positionen ausgehend von ein und demselben zapfenartigen Abschnitt am Fixierelement eingestellt werden, um mittels des hohen hydraulischen Drucks seitens des Hydraulikaggregats das Schwert in das Erdreich eindringen zu lassen und so die entsprechenden Wurzeln des Baumstumpfes sicher durchzutrennen.

Gemäß einer weiteren vorteilhaften Ausgestaltung der Erfindung ist das Fixierelement ein stabförmiges Element zur Montage von in mindestens einem radialen Bohrloch am Baumstamm. Ein solches stabförmiges Element, das in einem radialen Loch durch den Baumstamm hindurch eingesetzt wird, ist sehr einfach in der Anwendung und wirkungsvoll für die sichere Fixierung der Schneideeinheit in Längsrichtung des Baumstamms. Nach einem Bohren eines solchen radialen Lochs im Baumstamm oder beispielsweise von zwei um 90° zueinander versetzten derartigen Löchern, kann das stabförmige Element einfach in die jeweiligen Löcher eingesetzt werden und dient anschließend zur sicheren Halterung der Schneideeinheit während dem Schneidevorgang des Schwertes von der Schneideeinheit mit dem hohen hydraulischen Druck. Als ein solches stabförmiges Element kann beispielsweise eine metallische Welle eingesetzt werden, die vorzugsweise eine glatte Oberfläche aufweist. Ein solches stabförmiges Element gemäß dem Fixierelement ist in der Abmessung auf die entsprechende Öffnung an der Schneideeinheit angepasst. Das Fixierelement in solch einer Form ist konstruktiv äußerst einfach und leicht zu transportieren. Die Vorrichtung zum Fällen von Bäumen und Entfernen von Baumstümpfen nach der Erfindung benötigt daher keine aufwendigen Halterungen oder Klemmstative, die bei fahrzeuggebundenen großen derartigen Vorrichtungen verwendet werden, um den Baumstamm sicher beim Durchtrennen der Wurzeln des Baumes im oberen Bereich zu halten. Mit der erfindungsgemäßen Vorrichtung wird quasi ähnlich wie beim konventionellen Fällen mittels einer Kreissäge die Durchtrennung der Wurzeln ohne ein gezieltes Festhalten des Baumstammes im oberen Bereich durchgeführt. Durch ein gezieltes Ausrichten und Anwenden der Schneideeinheit nach er Erfindung kann die entsprechende Fallrichtung des Baumstammes gezielt ausgewählt werden.

Gemäß einer diesbezüglich alternativen weiteren Ausgestaltung der Erfindung ist das Fixierelement zur Montage der Vorrichtung ein den Baumstamm vollständig umgreifendes Spannelement. Ein solches den Baumstamm umgreifendes Spannelement hat den Vorteil, dass vorab keine Löcher in den Baumstamm gebohrt werden müssen. Außerdem ermöglicht ein solches umgreifendes Spannelement zur Fixierung der Schneideeinheit auch das Fällen von Bäumen mit vergleichsweise geringem Durchmesser. Als ein solches spannendes Fixierelement kann beispielsweise eine Art Kette eingesetzt werden, die über einen Spannmechanismus nach einem Anlegen um den Baumstamm herum fest fixiert werden kann. Solch ein umgreifendes Spannelement als Fixierelement zur Montage am Baumstamm ist dennoch wenig raumeinnehmend und erfordert keine große Gerätschaften zur Anbringung der Fällvorrichtung. Das beispielsweise in Form von einer Kette vorgesehene Spannelement wird einfach an der geeigneten Höhe des Baumstammes um den Baumstamm herum angelegt und dort spannend befestigt. Anschließend ist die Vorbereitung des Fällvorgangs abgeschlossen und die Schneideeinheit kann an den jeweiligen radialen Positionen des Fixierelements am Umfang des Baumstammes angesetzt werden, um den eigentlichen Trennvorgang mittels des hohen hydraulischen Drucks durch das Schwert der Schneideeinheit in Richtung des Wurzelbereichs des Baumes auszuführen. Ein solches Fixierelement in Form eines umgreifenden Spannelements ist des Weiteren vorzugsweise in der Länge einstellbar, so dass unterschiedliche Durchmesser von Baumstämmen mit dem gleichen Fixierelement gefällt werden können. Beispielsweise kann ein umgreifendes Spannelement in Form von einer Kette mit einem Spannmechanismus vorgesehen sein, bei welcher die einzelnen Kettenglieder entweder entfernt oder zusätzliche Kettenglieder angebracht werden können. Die Aufbringung der Spannkraft für die Fixierung des umgreifenden Spannelements kann beispielsweise auf mechanische Art und Weise über einen Schraubmechanismus erfolgen oder alternativ auch über eine hydraulisch aufgebrachte Spannkraft. Dem Fachmann des Gebietes sind weitere Möglichkeiten einer Fixierung mittels eines umgreifenden Spannelements an dem Baumstamm geläufig.

Nach einer weiteren vorteilhaften Ausgestaltung der Erfindung weist das Hydraulikaggregat eine autarke Energiequelle insbesondere in Form eines Elektromotors oder eines Verbrennungsmotors auf. Der hydraulische Druck kann somit an Ort und Stelle und unabhängig von einer externen Kraftquelle erzeugt werden. Es ist somit auch nicht erforderlich, ein entsprechendes Versorgungsfahrzeug in der Nähe der Stelle des zu fällenden Baumes vorzusehen. Das Hydraulikaggregat selbst weist zum Beispiel einen Elektromotor oder einen Verbrennungsmotor auf, über welchem der erforderliche hydraulische hohe Druck erzeugbar ist. Eine entsprechende Ausgestaltung des Hydraulikaggregats kann beispielsweise eine Kombination von einem Verbrennungsmotor, einer Kupplung und einer Hydraulikpumpe mit Tank umfassen, die in einem gemeinsamen Gestell montiert sind und über die Hydraulikschläuche die Schneideeinheit mit dem erforderlichen Hydraulikdruck versorgen. Die Betätigung der Schneideeinheit zum Ausfahren des Schwertes und zum Zurückfahren des Schwertes kann somit an einer beliebigen Stelle unabhängig von der Verfügbarkeit einer Energiequelle ausgeführt werden. Die Vorrichtung nach der Erfindung ist somit für einen vielseitigen und variablen Einsatz auch in schwer zugänglichem Gelände bestens geeignet.

Gemäß einer weiteren vorteilhaften Ausgestaltung der Erfindung ist das Schwert der Schneideeinheit lösbar am Kolben der aus einer Kolben-/Zylindereinheit bestehenden Schneideeinheit angebracht. Auf diese Weise können für unterschiedliche Anwendungszwecke verschiedenartige Schwerter an der Schneideeinheit leicht angebracht werden. Beispielsweise können schmalere Schwerter und breitere Schwerter leicht ausgetauscht werden. Auch können unterschiedlich geformte Schwerter an der Schneideeinheit eingesetzt werden, ohne dass die gesamte Schneideeinheit ausgetauscht werden muss.

Gemäß einer weiteren vorteilhaften Ausgestaltung der Erfindung weist das Schwert eine schaufelartig verbreitete Form mit einer vorderseitigen Schneidkante auf. Ein solches schaufelartig verbreitetes Schwert kann in einer geraden Form oder in einer leicht gekrümmten Form entsprechend der Krümmung des Außenumfanges des Baumstammes vorgesehen werden. Durch die verbreitete Form des Schwertes von der Schneideeinheit lässt sich ein vergleichsweise großer Bereich von Wurzeln mit einem Vorgang eines Ausfahrens des Schwertes durchtrennen.

Gemäß einer weiteren vorteilhaften Ausgestaltung der Erfindung ist das Schwert mit einer geraden bzw. geradlinigen Schneidkante gebildet. Auf alternative Art und Weise kann das Schwert auch eine konkave Schneidkante aufweisen, die im Vergleich zur geraden Schneidkante eine größere Angriffslinie für die ebenfalls abgerundeten Wurzelstümpfe bietet.

Gemäß einer weiteren vorteilhaften Ausgestaltung der Erfindung sind die Hydraulikschläuche zwischen dem Hydraulikaggregat und der Schneideeinheit mit Schnellkupplungen zum Anschluss versehen. Für einen Transport der Vorrichtung können so die Komponenten voneinander getrennt werden. Die Schnellkupplungen erlauben eine Lösung von entweder der Schneideeinheit oder dem Hydraulikaggregat, wobei die entsprechenden Schnellkupplungen mit einem Verschluss versehen werden, um das Herausfließen von Hydrauliköl zu vermeiden. Der Transport und der Aufbau der Vorrichtung auch in unwegsamem Gelände und an schwer zugänglichen Stellen mit beengten Raumverhältnissen sind dadurch erleichtert.

Gemäß einer weiteren vorteilhaften Ausgestaltung der Erfindung ist eine duale oder multifunktionale Steuereinheit vorgesehen, die entweder ein manuelles hydraulisches Steuergerät, ein kabelgebundenes elektrisches Steuergerät oder ein kabelloses Elektrosteuergerät ist. Je nach Bedarf kann so die Betätigung zum Fällen von Bäumen und zum Durchtrennen von Wurzeln direkt an dem Hydraulikaggregat erfolgen oder entfernt von dem Baumstamm und dem Hydraulikaggregat, um eine Verletzungsgefahr zu vermeiden. Selbstverständlich können auch eine Kombination von derartigen Steuereinheiten vorgesehen sein, beispielsweise ein direktes manuelles Steuergerät am Hydraulikaggregat selbst in Kombination mit einem kabellosen Elektrosteuergerät, das es einer Bedienperson erlaubt, an einer entfernten Stelle von dem Baum die Betätigung der Schneideeinheit der Vorrichtung anzusteuern.

Gemäß einer weiteren vorteilhaften Ausgestaltung der Erfindung ist außerdem eine hydraulisch betriebene Bohrmaschine vorgesehen, die zum Koppeln mit dem Hydraulikaggregat angepasst ist. Für den Fall eines Fixierelements in Form von in radialen Löchern eingreifenden Wellen oder stabförmigen Elementen kann so das Bohren der Löcher mit einem Antrieb direkt durch das Hydraulikaggregat erfolgen. Die hydraulisch betriebene Bohrmaschine muss einfach nur an dem Hydraulikaggregat angeschlossen werden, so dass die Bohrmaschine selbst auch mit einer autarken Energieversorgung versehen ist.

Gemäß einer weiteren vorteilhaften Ausgestaltung der Erfindung sind das Hydraulikaggregat, die Schneideeinheit, die Hydraulikschläuche und/oder eine hydraulische Bohrmaschine modulartig als ein variabler Bausatz für verschiedene Anwendungszwecke ausgebildet. So können beispielsweise verschieden große und damit verschieden schwere Schneideeinheiten vorhanden sein, die beliebig je nach Bedarf an ein und dasselbe Hydraulikaggregat angeschlossen werden können. Auch kann das Hydraulikaggregat entweder mit einem Elektromotor oder mit einem Verbrennungsmotor versehen sein und dennoch mit den verschiedenen Schneideeinheiten gleichermaßen verbunden werden. Der modulartige Aufbau als eine Art Bausatz der Vorrichtung erlaubt es zudem die verschiedenen Komponenten getrennt anzuschaffen und je nach Bedarf jeweils zu ergänzen. Somit ist die hydraulische Schneideeinheit selbst auch beispielsweise an einem stationären Hydraulikaggregat anschließbar und kann somit auf vielseitige Art und Weise eingesetzt werden.

Die Erfindung wird im Folgenden anhand von mehreren Ausführungsbeispielen mehr im Detail und unter Bezugnahme auf die beigefügten Zeichnungen beschrieben werden.

In den Zeichnungen zeigen die verschiedenen Figuren:
- Fig. 1: ist eine schematische Gesamtansicht einer erfindungsgemäßen Vorrichtung zum Baumfällen und/oder Entfernen von Baumstümpfen gemäß einem ersten Ausführungsbeispiel;
- Fig. 2: ist eine Draufsicht von oben eines Fixierelementes des ersten Ausführungsbeispiels der erfindungsgemäßen Vorrichtung;
- Fig. 3: ist eine Seitenansicht der Schneideeinheit im mit dem Fixierelement am Baumstamm angebrachten Zustand gemäß dem ersten Ausführungsbeispiel in verschiedenen Stellungen;
- Fig. 4: ist eine Draufsicht von oben eines zweiten Ausführungsbeispiels einer erfindungsgemäßen Vorrichtung mit einem Spannelement als Fixierelement;
- Fig. 5: ist eine Vorderansicht einer Schneideeinheit und eines Fixierelements gemäß dem zweiten Ausführungsbeispiel; und
- Fig. 6: ist eine Detailansicht eines hydraulischen Bohrers gemäß einem Ausführungsbeispiel der erfindungsgemäßen Vorrichtung.

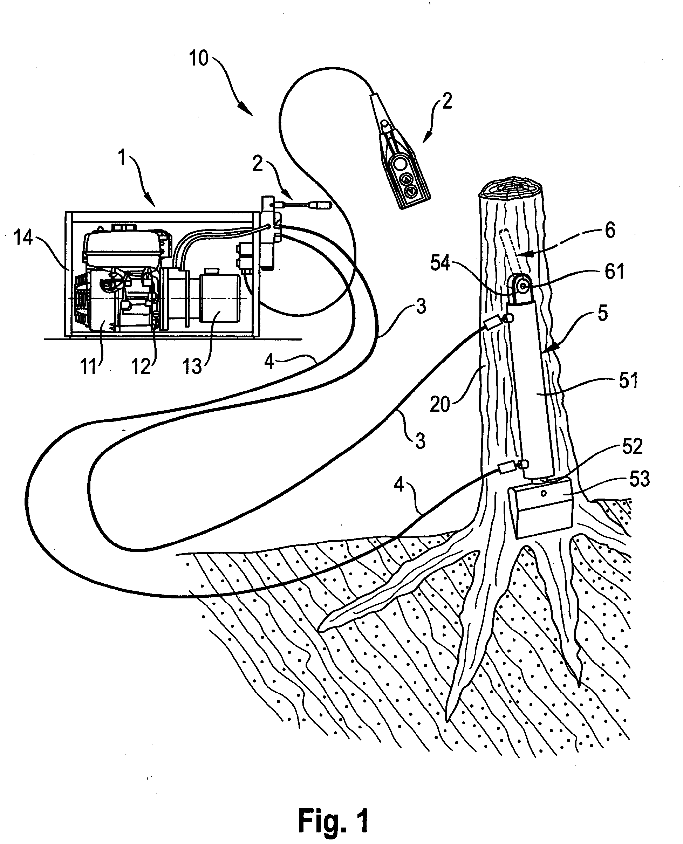

Die Fig. 1 zeigt in einer Gesamtansicht ein erstes Ausführungsbeispiel einer erfindungsgemäßen Vorrichtung 10 mit einem Hydraulikaggregat 1 und einer daran angeschlossenen Schneideeinheit 5, die hier im Anwendungszustand an einem Baumstamm 20 fixiert gezeigt ist. Die Vorrichtung 10 kann einerseits zum Fällen von Bäumen eingesetzt werden und andererseits auch zum Entfernen von Baumstümpfen mit mindestens dem größten Teil eines Wurzelbereichs der Bäume. Die Vorrichtung 10 ist als ein mobiles, fahrzeugunabhängiges Aggregat gebildet und besteht im Wesentlichen aus einem Hydraulikaggregat 1 zur Erzeugung eines hydraulischen Drucks und einer Schneideeinheit 5, die selbst direkt am Baumstamm über ein Fixierelement 6 zum Durchtrennen von Wurzeln des Baumes angebracht wird. Die Schneideeinheit 5 wird hydraulisch betätigt über den durch das Hydraulikaggregat 1 erzeugten Druck und ist hierzu über Hydraulikschläuche 3, 4 verbunden.

Bei dem ersten Ausführungsbeispiel der erfindungsgemäßen Vorrichtung 10, das in der Fig. 1, 2 und 3 gezeigt ist, ist als ein Hydraulikaggregat 1 eine Motor-/Hydraulikpumpenkombination vorgesehen, die in einem Tragegestell 14 montiert ist. Ein Verbrennungsmotor 11, der alternativ auch als Elektromotor ausgebildet sein kann, ist über eine Kupplung 12 mit einer Hydraulikpumpe 13 gekoppelt, um einen hohen hydraulischen Druck zu erzeugen, der über die Hydraulikschläuche 3, 4 an die Schneideeinheit 5 übertragen wird. Das Hydraulikaggregat 1 ist damit mit einer autarken Kraftquelle versehen, so dass es variabel an verschiedenen Stellen eingesetzt werden kann, wo keine äußere Stromversorgung oder Kraftquelle vorhanden ist. Zur Betätigung des Hydraulikaggregats 1 ist bei dem in der Fig. 1 gezeigten Beispiel einerseits ein Handhebel 2 vorhanden, über den entweder der Hydraulikschlauch 3 oder der Hydraulikschlauch 4 mit Druck beaufschlagt werden kann, so dass die hydraulische Schneideeinheit 5 jeweils ausgefahren und wieder eingefahren werden kann. Ergänzend oder alternativ ist bei dem gezeigten ersten Ausführungsbeispiel eine elektrische Fernbedienung als Steuereinheit 2 vorhanden, so dass eine Bedienperson auch weiter entfernt von der Stelle des Baumes die Vorrichtung 10 betätigen kann. Die Steuereinheit ist vorzugsweise als eine multifunktionale Steuerung ausgebildet. Zum Durchführen eines Fällens eines Baumes oder eines Entfernen eines Baumstumpfes aus dem Erdreich wird die Schneideeinheit 5 über ein Fixierelement 6 nahe am Baumstamm in der in der Fig. 1 gezeigten Art und Weise angebracht. Das Fixierelement 6 ist bei diesem Ausführungsbeispiel ein stabförmiges Element oder eine Welle, die in eine oder mehrere radiale Bohrungen in dem Baumstamm eingesetzt wird (vgl. gestrichelte Linie in der Fig. 1). Das Fixierelement 6 erlaubt ein Anbringen der Schneideeinheit 5 über ein Befestigungsgelenkauge 54, das am oberen Ende der Schneideeinheit 5 vorgesehen ist.

Die Schneideeinheit 5 ist insgesamt eine hydraulische Kolben-/Zylindereinheit mit einem Zylinder 51, in welchem der Kolben 52 verschiebbar und über einen Hydraulikdruck verlagerbar angeordnet ist. An dem unteren freien Ende des Kolbens 52 weist die Schneideeinheit 5 ein Schwert 53 auf, das mit einer vorderen Schneidkante gebildet ist. Wenn die Schneideeinheit 5, wie es in der Fig. 1 dargestellt ist, mit dem Fixierelement 6 an dem zapfenartigen Abschnitt 61 über das Befestigungsgelenkauge 54 montiert ist, kann mit dem Schwert 53 der Schneideeinheit 5 der im Erdreich liegende Wurzelbereich des Baumes 20 gezielt durchtrennt werden. Mit der Steuereinheit 2 in Form des Handhebels oder einer elektrischen Fernbedienung, wird der Hydraulikschlauch 3 mit einem hohen hydraulischen Druck beaufschlagt, so dass der Kolben 52 und das daran befestigte Schwert in Richtung nach unten in das Erdreich mit einem kraftvollen Hub ausgefahren wird. Nach dem Durchtrennen des Wurzelbereichs wird wiederum der Hydraulikschlauch 4 mit Druck beaufschlagt, so dass das Schwert aus dem Erdreich wieder herausgezogen wird und der Kolben 52 der Schneideeinheit 5 einfährt. Dieser Vorgang lässt sich auch und insbesondere bei schwierigen Platzverhältnissen leicht umsetzen, beispielsweise auch dann, wenn der Baum nahe an einer Mauer steht oder die umgebenden Bepflanzungen nicht beschädigt werden sollen. Die Vorrichtung ist mobil und leicht transportierbar und kann flexibel an verschiedenen Stellen eingesetzt werden. Nachdem das Schwert 53 an einer bestimmten radialen Stelle den Wurzelbereich durchtrennt hat, wird die als Fixierelement 6 dienende Welle aus dem Bohrloch herausgezogen und in ein beispielsweise um 90° versetztes zweites Bohrloch eingesteckt, so dass an einer nächsten umfänglichen Position der Wurzelbereich entsprechend durch Betätigung des Hydraulikaggregats 1 und der Schneideeinheit 5 durchtrennt werden kann.

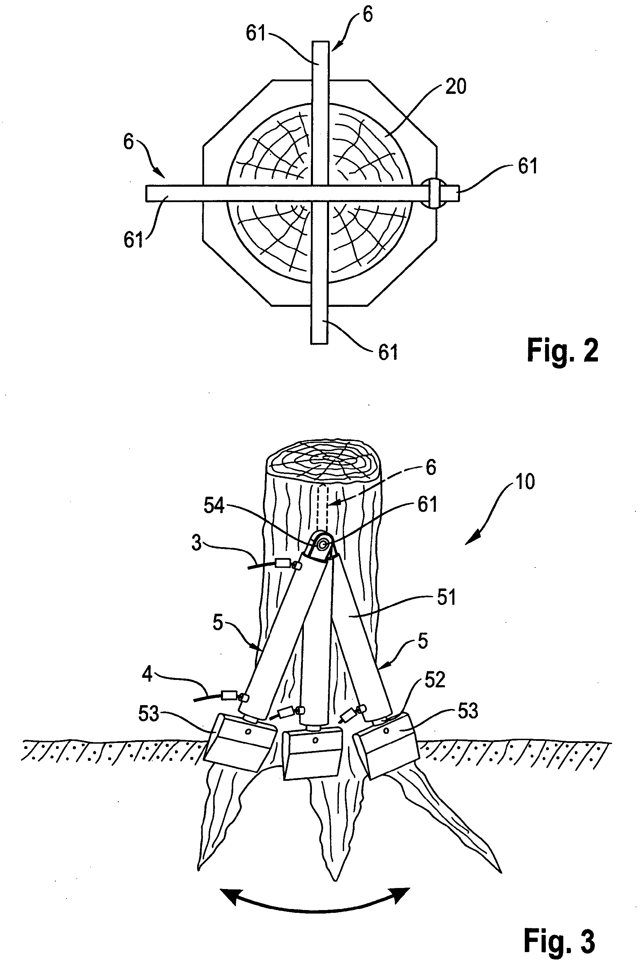

Dies ist schematisch in der Draufsicht der Fig. 2 veranschaulicht, wo zwei um 90° zueinander versetzte Bohrlöcher in den Baumstamm gebohrt werden, in die entsprechend die als Fixierelement 6 dienende Welle eingesetzt wird. Die Schneideeinheit 5 wird bei diesem Beispiel also an vier verschiedenen Stellen am Baumstamm angebracht, wobei sie nicht nur senkrecht nach unten gehend wirken kann, sondern ebenso seitlich leicht versetzt aufgrund der Verschwenkbarkeit der Schneideeinheit 5 im Verhältnis zu dem Fixierelement 6. Dies ist mit den verschiedenen Stellungen der Schneideeinheit 5 in der Fig. 3 veranschaulicht und den mit Strichen gekennzeichneten Schnittlinien in der Fig. 2.

Um die Schneideeinheit 5 einerseits sicher am Baum zu fixieren für das wirksame Einleiten der hydraulischen Kraft auf das Schwert 53 bei gleichzeitiger freier Verschwenkbarkeit um den Anlenkungspunkt am Fixierelement 6, ist die Schneideeinheit 5 mit einem sogenannten Befestigungsgelenkauge 54 versehen, das nicht nur eine seitliche Verschwenkung, sondern auch eine Verschwenkung von vorne nach hinten, das heißt weg von dem Baumstamm oder näher hin zu dem Baumstamm ermöglicht. Damit lassen sich mit ein und denselben Befestigungspunkt des Fixierelements 6 verschiedene Stellen im Wurzelbereich erreichen. Ein gezieltes Durchtrennen von Wurzeln, beispielsweise auch um eine Fallrichtung vorab zu bestimmen, ist auf diese Weise möglich. Die Hydraulikschläuche 3, 4 sind mit Schnellkupplungen versehen, um für den Transport eine Trennung zwischen dem Hydraulikaggregat 1 und der Schneideeinheit 5 zu ermöglichen. Außerdem können so flexibel verschiedenartige Schneideeinheiten mit dem Hydraulikaggregat 1 gekoppelt werden, um auf den entsprechenden Anwendungsfall hin die Vorrichtung 10 anzupassen. Die Schneideeinheit 5 ist bei dem gezeigten ersten Ausführungsbeispiel mit einem verbreiterten schaufelartigen Schwert 53 gebildet, das vorzugsweise austauschbar an dem Kolben 52 angebracht ist. Das Schwert 53 kann eine gerade Schneidkante oder eine konkave Schneidkante aufweisen und es kann in Form eines schmaleren oder eines breiteren Schwertes 53 gebildet sein. Die Vorrichtung 10 nach der Erfindung ist damit modulartig in Form eines Bausatzes aufgebaut und kann entsprechend den Bedürfnissen jeweils angepasst und eingerichtet werden.

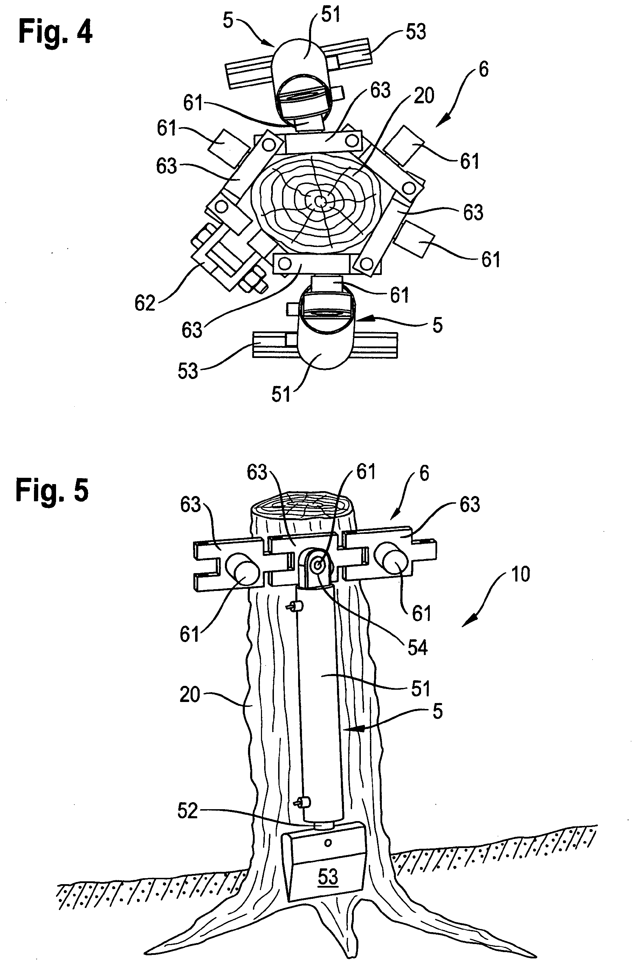

In der Fig. 4 und 5 ist ein zweites Ausführungsbeispiel einer erfindungsgemäßen Vorrichtung 10 zum Bäumefällen und zum Entfernen von Baumstümpfen gezeigt. Bei diesem zweiten Ausführungsbeispiel ist die Schneideeinheit im Wesentlichen die gleiche wie bei dem ersten Ausführungsbeispiel. Auch ist hier ein ähnliches Hydraulikaggregat 1 vorgesehen, welches in den Figuren nicht extra dargestellt ist. Die Schneideeinheit 5 und das Hydraulikaggregat 1 sind als mobile transportable Komponenten ebenso wie das Fixierelement 6 gebildet, so dass die Vorrichtung fahrzeugunabhängig an beliebigen Stellen und auch bei beengten Raumverhältnissen eingesetzt werden kann. Im Unterschied zum ersten oben beschriebenen Ausführungsbeispiel ist bei diesem zweiten Ausführungsbeispiel als ein Fixierelement 6 ein den Baumstamm von außen umgreifendes Spannelement gebildet. Das Fixierelement 6 wird um den Baumstamm herum angelegt und mittels einer Spanneinrichtung 62 angezogen, so dass es sicher und fest am Baum angebracht ist. Dieses Fixierelement 6, das in der Fig. 4 und 5 gezeigt ist, besteht aus mehreren Kettengliedern, an denen jeweilige zapfenartige Abschnitte 61 nach außen vorragend von dem Baumstamm vorhanden sind. Die einzelnen Kettenglieder 63 werden je nach Durchmesser des Baumstamms hinzugefügt oder entfernt, so dass die Länge auf den Durchmesser des Baumstamms angepasst werden kann. Anschließend wird die Kette dieses Fixierelements 6 um den Baumstamm herum angelegt und durch die Spanneinrichtung 62 fest am Baum fixiert. Anschließend ist die Vorrichtung 10 für das Koppeln mit der Schneideeinheit 5 bereit, die mit ihrem Befestigungsgelenkauge 54 einfach auf die zapfenartige Abschnitte 61 des Fixierelements 6 aufgesteckt werden kann. Die jeweiligen Kettenglieder 63 bieten mit ihren vorragenden zapfenartigen Abschnitten 61 eine größere Anzahl von Anbringungspunkten für die Schneideeinheit 5, so dass eine gleichmäßigere und größere Anzahl von Schnitten in dem Wurzelbereich des Baumstammes möglich ist.

Die Betätigung und der Betrieb der Vorrichtung 10 erfolgt auf analoge Weise zu der oben beschriebenen ersten Ausführungsform. Über das Hydraulikaggregat 1 und eine entsprechende Steuereinheit 2 werden entweder der Hydraulikschlauch 3 oder der Hydraulikschlauch 4 mit Druck beaufschlagt, so dass der Kolben 52 zusammen mit dem Schwert 53 in das Erdreich ausfährt und wieder herausgezogen werden kann. Nach dem Durchführen eines Trennvorgangs an einer Position wird die Schneideeinheit 5 einfach an der nächsten Position angebracht und dort der Abtrennvorgang entsprechend wiederholt. Mit der erfindungsgemäßen Vorrichtung 10 lassen sich so auf konstruktiv sehr einfache Art und Weise Baumstümpfe auch an schwierigen Stellen gut entfernen. Auch ein Fällen von Bäumen ist mit der erfindungsgemäßen Vorrichtung sehr gut möglich, ohne dass hier aufwendige Gerätschaften wie fahrzeuggebundene Baumfäller oder ähnliches erforderlich sind. Die unmittelbare Umgebung des Baumes wird dabei nicht beschädigt, da die Vorrichtung sehr nah und direkt am Baumstamm selbst angebracht wird und dort keine weiteren Einrichtungen am Boden benötigt werden. Die erfindungsgemäße Vorrichtung lässt sich mobil und vorzugsweise von Hand transportieren. Der Schaden an der unmittelbaren Umgebung des Baumstammes und Baumstumpfes ist äußerst gering und die Stelle, wo ursprünglich der Baumstamm stand, kann unmittelbar wieder bepflanzt werden. Auch bei diesem zweiten Ausführungsbeispiel kann das Schwert 53 eine gerade Schneidkante oder eine konkave Schneidkante aufweisen. Die Hydraulikschläuche 3, 4, welche hier nicht dargestellt sind, werden auch hier über Schnellkupplungen mit dem Hydraulikaggregat 1 und/oder der Schneideeinheit 5 verbunden. Die Befestigung und das Anspannen des Fixierelements 6 in Form einer umgreifenden Kette kann über das dargestellte mechanische Spannelement 62 erfolgen oder aber alternativ auch mittels hydraulischem Druck, der dann ebenso von dem Hydraulikaggregat 1 her kommt.

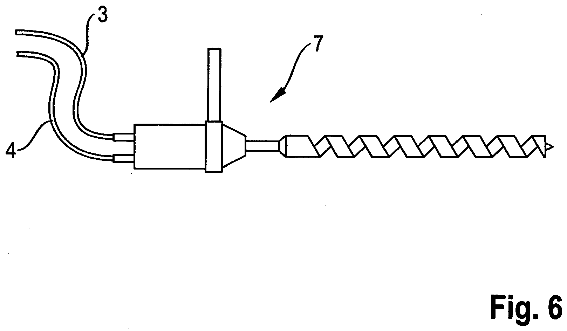

Die Fig. 6 zeigt abschließend noch einen hydraulischen Bohrer 7, der zum Herstellen von radialen Bohrlöchern für das Fixierelement 6 in dem Baumstamm dient. Der hydraulische Bohrer 7 wird über die Hydraulikschläuche 3, 4 an das Hydraulikaggregat 1 angeschlossen, um beispielsweise zwei um 90° versetzte radiale Bohrungen in dem Baumstamm zur Fixierung der als Fixierelement 6 dienenden Welle zu bohren (vgl. Fig. 1 und 2).

## Patentansprüche

1. Vorrichtung (10) zum Fällen von Bäumen und Entfernen von Baumstümpfen mit einem Hydraulikaggregat (1), welches über eine Steuereinheit (2) steuerbar ist und über Hydraulikschläuche (3, 4) mit einer Schneideeinheit (5) verbunden ist, wobei die Schneideeinheit (5) einen Hydraulikzylinder (51) und ein mit einem Kolben (52) verbundenes Schwert (53) umfasst, das zum Abtrennen von Baumstümpfen oder Wurzeln ausgebildet ist, **dadurch gekennzeichnet, dass** die Schneideeinheit (5) und das Hydraulikaggregat (1) fahrzeugunabhängige mobile Komponenten sind und dass ein Fixierelement (6) vorgesehen ist, welches mit dem Hydraulikzylinder (51) der Schneideeinheit (5) lösbar am Umfang eines Baumstammes an verschiedenen radialen Positionen koppelbar ist und derart ausgebildet ist, dass für eine hydraulische Krafteinleitung in Richtung des Wurzelbereichs des Baumes eine feste Fixierung der Schneideeinheit (5) mindestens in Längsrichtung des Baumstammes und in unmittelbarer Stammnähe möglich ist.

2. Vorrichtung (10) nach Anspruch 1, **dadurch gekennzeichnet, dass** die Schneideeinheit (5) an dem zum Schwert gegenüberliegenden Ende mit einem Befestigungsgelenkauge (54) versehen ist für eine variable Schwenkbarkeit im Verhältnis zum Fixierelement (6).

3. Vorrichtung (10) nach Anspruch 1 oder 2, **dadurch gekennzeichnet, dass** das Hydraulikaggregat (1) und die Schneideeinheit (5) voneinander getrennte und flexibel positionierbare Komponenten sind, welche vorzugsweise manuell transportierbar und aufstellbar sind.

4. Vorrichtung (10) nach einem der vorangegangenen Ansprüche, **dadurch gekennzeichnet, dass** das Fixierelement (6) mindestens einen zapfenartigen Abschnitt (61) aufweist, mit welchem die Schneideeinheit (5) mittels eines Befestigungsgelenkauges (54) oder ähnlichem koppelbar ist.

5. Vorrichtung (10) nach einem der vorangegangenen Ansprüche, **dadurch gekennzeichnet, dass** das Fixierelement (6) ein stabförmiges Element zur Montage in mindestens einem radialen Bohrloch am Baumstamm ist.

6. Vorrichtung (10) nach einem der Ansprüche 1 bis 4, **dadurch gekennzeichnet, dass** das Fixierelement (6) zur Montage ein den Baumstamm vollständig umgreifendes Spannelement ist.

7. Vorrichtung (10) nach einem der vorangegangenen Ansprüche, **dadurch gekennzeichnet, dass** das Hydraulikaggregat (1) eine autarke Energiequelle, insbesondere in Form eines Elektromotors oder Verbrennungsmotors, aufweist.

8. Vorrichtung (10) nach einem der vorangegangenen Ansprüche, **dadurch gekennzeichnet, dass** das Schwert (53) der Schneideeinheit (5) lösbar am Kolben (52) angebracht ist.

9. Vorrichtung (10) nach einem der vorangegangenen Ansprüche, **dadurch gekennzeichnet, dass** das Schwert (53) eine schaufelartig verbreiterte Form mit einer vorderseitigen Schneidkante aufweist.

10. Vorrichtung (10) nach einem der vorangegangenen Ansprüche, **dadurch gekennzeichnet, dass** das Schwert (53) mit einer geraden Schneidkante gebildet ist.

11. Vorrichtung (10) nach einem der Ansprüche 1 bis 9, **dadurch gekennzeichnet, dass** das Schwert (53) mit einer konkaven Schneidkante gebildet ist.

12. Vorrichtung (10) nach einem der vorangegangenen Ansprüche, **dadurch gekennzeichnet, dass** die Hydraulikschläuche (3, 4) mit Schnellkupplungen zum Anschluss an das Hydraulikaggregat (1) und/oder an die Schneideeinheit (5) versehen sind.

13. Vorrichtung (10) nach einem der vorangegangenen Ansprüche, **dadurch gekennzeichnet, dass** die Steuereinheit (2) ein manuelles hydraulisches Steuergerät, ein kabelgebundenes oder ein kabelloses Elektrosteuergerät ist.

14. Vorrichtung (10) nach einem der vorangegangenen Ansprüche, **dadurch gekennzeichnet, dass** ein hydraulisch betriebene Bohrmaschine zum Koppeln mit dem Hydraulikaggregat (1) vorgesehen ist.

15. Vorrichtung (10) nach einem der vorangegangenen Ansprüche, **dadurch gekennzeichnet, dass** das Hydraulikaggregat (1), die Schneideeinheit (2), die Hydraulikschläuche (3, 4) und/oder eine hydraulische Bohrmaschine modulartig als ein variabler Bausatz für verschiedene Anwendungszwecke ausgebildet sind.

## Claims

1. A device (10) for felling trees and removing tree stumps with a hydraulic unit (1), which may be controlled by means of a control unit (2) and which is connected with a cutting unit (5) through hydraulic hoses (3, 4), wherein the cutting unit (5) comprises a hydraulic cylinder (51) and a sword (53) connected to a piston (52), wherein the sword is designed for separating tree stumps or roots, **characterized in that** the cutting unit (5) and the hydraulic unit (1) are vehicle-independent mobile components, and that a fixing element (6) is provided, which is detachably connectable with the hydraulic cylinder (51) of the cutting unit (5) at the circumference of a tree trunk at different radial positions, and which is designed such that for the introduction of a hydraulic force in the direction of the root area of the tree a fixed attachment of the cutting unit (5) at least in the longitudinal direction of the tree trunk and in immediate proximity to the trunk is possible.

2. The device (10) according to claim 1, **characterized in that** the cutting unit (5) is provided at its end opposing the sword with a spherical fixing bearing (54) for a variable swiveling in relation to the fixing element (6).

3. The device (10) according to claim 1 or 2, **characterized in that** the hydraulic unit (1) and the cutting unit (5) are separated elements from each other, which are able to be positioned in a flexible manner, which may preferably be transported and installed manually.

4. The device (10) according to any one of the preceding claims, **characterized in that** the fixing element (6) comprises at least one pin-like portion (61), with which the cutting unit (5) is connectable by means of a spherical fixing bearing (54) or the like.

5. The device (10) according to any one of the preceding claims, **characterized in that** the fixing element (6) is a rod-shaped element for the mounting in at least one radial drilling hole at the tree trunk.

6. The device (10) according to any one of claims 1 to 4, **characterized in that** the fixing element (6) for mounting is a tensioning element, which completely encompasses the tree trunk.

7. The device (10) according to any one of the preceding claims, **characterized in that** the hydraulic unit (1) comprises a self-sufficient energy source, in particular in the form of an electric motor or a combustion engine.

8. The device (10) according to any one of the preceding claims, **characterized in that** the sword (53) of the cutting unit (5) is detachably attached to the piston (52).

9. The device (10) according to any one of the preceding claims, **characterized in that** the sword (53) has a shovel-like broadened form with a front-side cutting edge.

10. The device (10) according to any one of the preceding claims, **characterized in that** the sword (53) is formed with a straight cutting edge.

11. The device (10) according to any one of claims 1 to 9, **characterized in that** the sword (53) is formed with a concave cutting edge.

12. The device (10) according to any one of the preceding claims, **characterized in that** the hydraulic hoses (3, 4) are provided with quick connectors for the connection to the hydraulic unit (1) and/or to the cutting unit (5).

13. The device (10) according to any one of the preceding claims, **characterized in that** the control unit (2) is a manual hydraulic control device, an electronic cable control device or a wireless electronic control device.

14. The device (10) according to any one of the preceding claims, **characterized in that** a hydraulic-driven drilling device is provided to be coupled with the hydraulic unit (1).

15. The device (10) according to any one of the preceding claims, **characterized in that** the hydraulic unit (1), the cutting unit (5), the hydraulic hoses (3, 4) and/or a hydraulic drilling device are formed in a modular manner as a variable assembly set for different purposes of use.

## Revendications

1. Dispositif (10) destiné à l'abattage d'arbres et à éliminer des souches d'arbres comprenant un agrégat hydraulique (1), qui est contrôlable au moyen d'une unité de contrôle (2) et qui est connecté au moyen de conduits hydrauliques (3, 4) avec une unité de couteau (5), l'unité de couteau (5) comprenant un cylindre hydraulique (51) et une épée (53) connectée avec un piston (52), l'épée étant réalisée pour la séparation des souches d'arbres ou des racines, **caractérisé en ce que** l'unité de couteau (5) et l'agrégat hydraulique (1) sont des composantes mobiles indépendantes d'un véhicule, et **en ce qu'**un élément de fixation (6) est prévu, qui peut être accroché au cylindre hydraulique (51) de l'unité de couteau (5) d'une manière détachable à la circonférence d'un tronc d'arbre à différentes positions radiales et qui est réalisé d'une telle manière que pour une introduction de force hydraulique en direction de la région des racines de l'arbre une fixation stable de l'unité de couteau (5) au moins en direction longitudinale du tronc d'arbre et à proximité immédiate du tronc est possible.

2. Dispositif (10) selon la revendication 1, **caractérisé en ce que** l'unité de couteau (5) est prévue à une extrémité opposée à l'épée avec une articulation de fixation sphérique (54) pour un basculement variable en relation à l'élément de fixation (6).

3. Dispositif (10) selon la revendication 1 ou 2, **caractérisé en ce que** l'agrégat hydraulique (1) et l'unité de couteau (5) sont des composantes séparées l'une de l'autre, qui peuvent être positionnées d'une façon flexible, qui sont de préférence transportables et à mettre en place manuellement.

4. Dispositif (10) selon l'une des revendications précédentes, **caractérisé en ce que** l'élément de fixation (6) comprend au moins une portion (61) en forme de pivot, avec laquelle l'unité de couteau (5) peut être accrochée au moyen d'une articulation de fixation sphérique (54) ou quelque chose semblable.

5. Dispositif (10) selon l'une des revendications précédentes, **caractérisé en ce que** l'élément de fixation (6) est un élément en forme de barre pour le montage dans au moins un trou de perçage radial au tronc d'arbre.

6. Dispositif (10) selon l'une des revendications 1 à 4, **caractérisé en ce que** l'élément de fixation (6) pour le montage est un élément de serrage, qui entoure complètement le tronc d'arbre.

7. Dispositif (10) selon l'une des revendications précédentes, **caractérisé en ce que** l'agrégat hydraulique (1) comprend une source d'énergie autarcique, en particulier en forme d'un moteur électrique un d'un moteur de combustion.

8. Dispositif (10) selon l'une des revendications précédentes, **caractérisé en ce que** l'épée (53) de l'unité de couteau (5) est attachée au piston (52) d'une manière détachable.

9. Dispositif (10) selon l'une des revendications précédentes, **caractérisé en ce que** l'épée (53) a une forme élargie de spatule avec un bord coupant à l'avant.

10. Dispositif (10) selon l'une des revendications précédentes, **caractérisé en ce que** l'épée (53) est réalisée avec un bord coupant rectiligne.

11. Dispositif (10) selon l'une des revendications 1 à 9, **caractérisé en ce que** l'épée (53) est réalisée avec un bord coupant en forme concave.

12. Dispositif (10) selon l'une des revendications précédentes, **caractérisé en ce que** les conduits hydrauliques (3, 4) sont prévus avec des connecteurs rapides pour la connexion à l'agrégat hydraulique (1) et/ou à l'unité de couteau (5).

13. Dispositif (10) selon l'une des revendications précédentes, **caractérisé en ce que** l'unité de contrôle (2) est un dispositif de contrôle hydraulique manuel, un dispositif de contrôle électronique avec des câbles ou un dispositif de contrôle électronique sans câbles.

14. Dispositif (10) selon l'une des revendications précédentes, **caractérisé en ce qu'**une perceuse hydraulique est prévue pour être couplée avec l'agrégat hydraulique (1).

15. Dispositif (10) selon l'une des revendications précédentes, **caractérisé en ce que** l'agrégat hydraulique (1), l'unité de couteau (5), les conduits hydrauliques (3, 4) et/ou une perceuse hydraulique sont réalisés dans une forme de module comme un kit de montage variable pour de différentes applications.
